(19) Europäisches Patentamt
European Patent Office
Office européen des brevets

(11) **EP 3 409 977 B1**

(12) **FASCICULE DE BREVET EUROPEEN**

(45) Date de publication et mention
de la délivrance du brevet:
**19.02.2020 Bulletin 2020/08**

(51) Int Cl.:
***F16H 37/06*** *(2006.01)*      ***B64C 27/12*** *(2006.01)*
***B64D 35/04*** *(2006.01)*

(21) Numéro de dépôt: **18168414.3**

(22) Date de dépôt: **20.04.2018**

(54) **MODULE DE TRANSMISSION DE PUISSANCE MECANIQUE REVERSIBLE, ET AERONEF**

REVERSIBLES MECHANISCHES LEISTUNGSÜBERTRAGUNGSMODUL, UND LUFTFAHRZEUG

REVERSIBLE MECHANICAL POWER TRANSMISSION MODULE, AND AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.06.2017 FR 1770574**

(43) Date de publication de la demande:
**05.12.2018 Bulletin 2018/49**

(73) Titulaire: **Airbus Helicopters
13725 Marignane Cedex (FR)**

(72) Inventeurs:
• **BARAIS, Olivier
13820 Ensues la Redonne (FR)**
• **DE MEERSCHMAN, Olivier
13410 Lambesc (FR)**
• **MERMOZ, Emmanuel
13790 Peynier (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**WO-A2-2007/086906      FR-A1- 2 964 948**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

La présente invention concerne un module de transmission de puissance mécanique et un aéronef. Par exemple, l'aéronef est un hélicoptère hybride muni d'au moins une hélice et d'un rotor principal participant au moins à la sustentation de l'aéronef.

Un hélicoptère peut comporter usuellement un système de transmission de puissance interposé cinématiquement entre au moins un moteur ainsi qu'un rotor principal et un rotor arrière de contrôle du mouvement en lacet de l'hélicoptère. Le moteur met en mouvement le système de transmission de puissance, le système de transmission de puissance entraînant alors en rotation le rotor principal et le rotor arrière.

Un autre type de giravion est dénommé par commodité « hélicoptère hybride ». Un hélicoptère hybride comporte une voilure tournante ainsi qu'au moins une hélice, par exemple deux hélices agencées de part et d'autre du fuselage sur une aile.

Par ailleurs, l'hélicoptère hybride est équipé d'un système de transmission de puissance permettant à au moins un moteur d'entraîner le rotor principal et chaque hélice.

Suite à un atterrissage, le pilote d'un hélicoptère hybride peut mettre au ralenti les moteurs de l'aéronef sans arrêter la voilure tournante, notamment si ce pilote doit redécoller l'hélicoptère hybride à brève échéance pour rallier une autre destination.

Par exemple, l'embarquement et le débarquement rapides de passagers peuvent être requis lors d'opérations d'urgence médicale. L'extinction des moteurs dans ces conditions ne parait donc pas pertinente. De même, la rotation de la voilure tournante au sol peut être intéressante afin de maintenir ses pales centrifugées en conditions de grand vent par exemple.

Pour protéger les passagers au sol à proximité des hélices, il peut être intéressant d'arrêter la rotation d'au moins une hélice au sol, tout en entraînant la voilure tournante au ralenti.

Toutefois, lorsque la voilure tournante et les hélices sont en permanence cinématiquement liées, l'arrêt des hélices ne peut être réalisé qu'en arrêtant la rotation de la voilure tournante. Lier cinématiquement la voilure tournante et les hélices peut permettre de faire transiter une puissance entre cette voilure tournante et les hélices.

Les systèmes de transmission de puissance connus peuvent notamment comprendre des systèmes à crabots et à moyen de synchronisation, des roues libres, des roues libres « contrôlable », des embrayages, des convertisseurs hydrocinétiques, des freins à friction.

Une roue libre classique est usuellement munie d'une portion entraînante et d'une portion entraînable, et d'au moins un galet ou équivalent. Un galet est par exemple agencé entre une rampe inclinée de la portion entraînante et une surface circulaire de la portion entraînable. Ainsi, lorsque la portion entraînable tourne plus vite que la portion entraînante, ledit galet se trouve au pied de la rampe inclinée ce qui désolidarise les portions entraînable et entraînante. A l'inverse, lorsque la portion entraînante tourne plus vite que la portion entraînable, le galet se dirige vers le haut de la rampe inclinée et se retrouve de fait coincée entre la portion entraînante et la portion entraînable. Par suite, la portion entraînante met en rotation la portion entraînable via ledit galet. Les portions entraînable et entraînante sont alors solidaires en rotation.

L'expression « roue libre » sans complément ou l'expression « roue libre incontrôlable » désigne par la suite une telle roue classique. L'expression « roue libre contrôlable » désigne un autre système, parfois dénommé « roue libre décrabotable ».

Une roue libre contrôlable est apte à être déconnectée sur requête contrairement à une roue libre classique. On se rapportera à la littérature pour trouver des exemples de réalisation d'une roue libre contrôlable. Par exemple, selon un premier mode de réalisation décrit par le document FR2670553, on remplace les galets d'une roue libre classique par des galets agencés dans une cage qui est mobile par l'intermédiaire d'un doigt.

Dès lors, une roue libre contrôlable peut fonctionner alternativement selon deux modes de connexion distincts. Selon un mode déconnecté, la portion entraînante de la roue libre ne peut en aucun cas mettre en mouvement sa portion entraînable. Selon l'exemple précédent, la cage est manœuvrée pour ne pas agencer les galets entre la portion entraînante et la portion entraînable.

Durant un mode connecté, la portion entraînante de la roue libre met en rotation sa portion entraînable dès que la vitesse de rotation de la portion entraînante devient supérieure ou égale à la vitesse de rotation de la portion entraînable, alors qu'à l'inverse ladite portion entraînante de la roue libre n'est pas apte à mettre en rotation ladite portion entraînable lorsque la vitesse de rotation de la portion entraînante est inférieure à la vitesse de rotation de la portion entraînable.

Durant le mode connecté, la roue libre contrôlable est donc soit glissante lorsque la vitesse de rotation de la portion entraînante est inférieure à la vitesse de rotation de la portion entraînable, soit entraînante lorsque la vitesse de rotation de la portion entraînante est supérieure ou égale à la vitesse de rotation de la portion entraînable. A l'inverse, durant le mode déconnecté, la roue libre contrôlable est nécessairement glissante.

Un embrayage présente usuellement une partie menante et une partie menée qui peuvent être rendues sur requête solidaires l'une de l'autre durant un mode embrayé. Lorsqu'un embrayage subit des couples mécaniques importants, sa partie menante peut glisser par rapport à sa partie menée dans le mode embrayé. Dès lors, le dimensionnement d'un tel embrayage peut conduire à un dispositif lourd et encombrant devant faire l'objet d'actions de maintenances fréquentes et onéreuses pour éviter un tel glissement.

Dans ce contexte, le document FR 2964948 présente un aéronef qui est muni d'une installation motrice qui entraîne une voiture tournante et au moins une hélice, l'installation motrice comportant au moins un moteur ayant un arbre de sortie mettant en mouvement une chaîne cinématique afin d'entraîner la voiture tournante. La chaîne cinématique comporte une boîte de transmission de puissance et une roue libre.

L'aéronef comporte un organe de liaison par moteur. Chaque organe de liaison est pourvu d'un arbre d'entraînement et d'une première roue dentée qui sont liés par un embrayage et par une roue libre contrôlable agencés en parallèle, l'arbre d'entraînement entraînant au moins une hélice pourvue d'un moyen de freinage de l'hélice, la première roue dentée engrenant la chaîne cinématique. Cet organe de liaison vise à entraîner une hélice, et non pas à distribuer une puissance mécanique générée par l'hélice.

Le document WO 2007/086906 est aussi connu.

La présente invention a alors pour objet de proposer un module de transmission de puissance mécanique alternatif formant un dispositif d'entraînement sélectif entre deux arbres permettant de subir des couples importants en fonctionnement.

Le module de transmission de puissance est muni d'un premier arbre de transmission de puissance et un deuxième arbre de transmission de puissance dénommés plus simplement « premier arbre » et « deuxième arbre ». Le premier arbre est apte, voire destiné, à être relié à un système de transmission de puissance qui entraîne une voiture tournante d'un aéronef et qui est entraîné par au moins un moteur de l'aéronef. Le deuxième arbre est apte, voire destiné, à être relié mécaniquement à une hélice de l'aéronef, directement ou indirectement via au moins un arbre intermédiaire et/ou une boîte de transmission de puissance intermédiaire par exemple. Le module de transmission de puissance comprend un premier étage d'engrenage et un deuxième étage d'engrenage ayant respectivement un premier rapport de vitesse de rotation et un deuxième rapport de vitesse de rotation qui sont différents, le premier étage d'engrenage comprenant une première roue mobile en rotation autour d'un premier axe de roue et un premier pignon mobile en rotation autour d'un premier axe de pignon, le deuxième étage d'engrenage comprenant une deuxième roue mobile en rotation autour d'un deuxième axe de roue et un deuxième pignon mobile en rotation autour d'un deuxième axe de pignon, le deuxième arbre étant solidaire en rotation du deuxième pignon autour du deuxième axe de pignon, un embrayage reliant le premier pignon à la deuxième roue, une roue libre contrôlable reliant cinématiquement la première roue au deuxième pignon.

Le premier arbre est solidaire en rotation du premier pignon autour du premier axe de pignon ou de la première roue autour du premier axe de roue. Le module de transmission de puissance comporte un organe à différentiel de vitesse agencé fonctionnellement entre le premier arbre et le deuxième arbre pour que le deuxième arbre induise la rotation du premier arbre lorsque le deuxième arbre présente une vitesse de rotation supérieure à une vitesse de rotation de la première roue, voire du premier arbre.

L'expression « organe à différentiel de vitesse » désigne tout système remplissant la fonction associée.

L'expression « agencé fonctionnellement » signifie que l'organe à différentiel de vitesse est disposé sur une ligne cinématique entre le premier arbre et le deuxième arbre.

Dès lors, le module de transmission de puissance comporte fonctionnellement trois lignes cinématiques entre le premier arbre et le deuxième arbre. Une première ligne inclut une roue libre contrôlable pilotée pour être positionnée dans un mode déconnecté ou un mode connecté, une deuxième ligne inclut un embrayage piloté pour être positionné dans un mode débrayé ou un mode embrayé. Un ou plusieurs organes de commande peuvent commander la roue libre contrôlable et l'embrayage. Par exemple, un calculateur raccordé à des capteurs peut être utilisé, et peut appliquer la logique du document FR 2 964 948.

La première ligne et la deuxième ligne permettent chacune au premier arbre de mettre en mouvement le deuxième arbre. La deuxième ligne est notamment sollicitée pour faire passer un faible couple ce qui permet d'utiliser un embrayage ayant des dimensions relativement restreintes. La première ligne et la deuxième ligne permettent aussi d'arrêter la rotation du deuxième arbre, même lorsque le premier arbre est toujours en rotation.

Une troisième ligne comporte l'organe à différentiel de vitesse pour permettre au deuxième arbre de mettre en mouvement le premier arbre. La troisième ligne permet de récupérer de la puissance mécanique à partir du deuxième arbre dans des cas particuliers. En fonctionnement normal, le premier arbre est mis en mouvement par un système mécanique pour entraîner le deuxième arbre. En cas de besoin, le deuxième arbre peut être sollicité pour injecter de la puissance mécanique dans le système mécanique.

Dans le cadre d'un hélicoptère hybride, des systèmes prévoient d'isoler la voiture tournante pour favoriser une autorotation de l'hélicoptère hybride. A l'inverse, le module de transmission de puissance permet de faire fonctionner une hélice en mode générateur de puissance pour participer à l'entraînement de la voiture tournante via la troisième ligne. Eventuellement de la puissance peut être récupérée sur les hélices fonctionnant en mode générateur de puissance durant certaines phases pour réduire la consommation de carburant du moteur, voire pour ralentir l'aéronef.

De plus, le module de transmission de puissance permet d'arrêter une hélice au sol.

Ce module de transmission de puissance peut aussi être agencé sur un hélicoptère classique pour arrêter un rotor arrière au sol.

Ainsi, le module de transmission de puissance peut être un équipement optionnel installable au choix au sein d'une boîte de transmission de puissance, ou encore sur une ligne cinématique existante.

Le module de transmission de puissance peut de plus comporter une ou plusieurs des caractéristiques qui suivent.

La roue libre contrôlable peut fonctionner soit selon un mode déconnecté durant lequel une portion entraînante de la roue libre contrôlable ne peut en aucun cas mettre en mouvement une portion entraînable de cette roue libre contrôlable, soit selon un mode connecté durant lequel la portion entraînante met en rotation la portion entraînable dès qu'une vitesse de rotation de la portion entraînante devient supérieure ou égale à une vitesse de rotation de la portion entraînable alors qu'à l'inverse la portion entraînante n'est pas apte à mettre en rotation ladite portion entraînable lorsque la vitesse de rotation de la portion entraînante est inférieure à la vitesse de rotation de la portion entraînable.

La roue libre contrôlable peut atteindre chacun des modes déconnecté et connecté. A chaque instant, la roue libre contrôlable est positionnée dans le mode connecté ou le mode déconnecté suivant le besoin.

Selon un aspect, l'organe à différentiel de vitesse peut inclure une roue libre incontrôlable qui fonctionne selon un unique mode durant lequel une partie menante de la roue libre incontrôlable met en rotation une partie menée de la roue libre incontrôlable lorsqu'une vitesse de rotation de la partie menante est supérieure ou égale à une vitesse de rotation de la partie menée, et éventuellement lorsque simultanément l'embrayage est dans un mode débrayé.

Selon un aspect, l'organe à différentiel de vitesse peut être agencé en parallèle de l'embrayage, cet organe à différentiel de vitesse incluant un premier organe et un deuxième organe, le premier organe étant solidaire en rotation de la deuxième roue autour du deuxième axe de roue, le deuxième organe étant solidaire en rotation du premier pignon autour du premier axe de pignon.

L'organe à différentiel de vitesse est ainsi cinématiquement disposé entre le premier pignon et la deuxième roue ce qui permet d'obtenir un module relativement compact et simple.

Selon un aspect, le module de transmission de puissance peut comporter une troisième roue en prise sur le deuxième pignon et un troisième pignon en prise sur la première roue, la troisième roue étant mobile en rotation autour d'un troisième axe de roue, le troisième pignon étant mobile en rotation autour d'un troisième axe de pignon, ledit organe à différentiel de vitesse comprenant une partie menante solidaire en rotation de la troisième roue autour du troisième axe de roue, ledit organe à différentiel de vitesse comprenant une partie menée solidaire en rotation du troisième pignon autour du troisième axe de pignon.

Eventuellement, la troisième roue peut comprendre un nombre de dents supérieur au nombre de dents du troisième pignon. Le quotient du nombre de dents du troisième pignon divisé par le nombre de dents de la première roue peut être inférieur au quotient du nombre de dents de la troisième roue divisé par le nombre de dents du deuxième pignon.

En dehors de phases de transition et de panne, la roue libre contrôlable transmet une puissance mécanique en mode nominal du premier arbre vers le deuxième arbre. En raison du nombre de dents de la troisième roue et du troisième pignon, l'organe à différentiel de vitesse est glissant.

Par contre, lorsque le deuxième arbre tourne plus vite que la première roue voire le premier arbre, l'organe à différentiel de vitesse est actif et transmet de la puissance de la troisième roue vers le troisième pignon. A l'inverse, la roue libre contrôlable est glissante.

Ainsi, l'organe à différentiel de vitesse et la roue libre contrôlable ne sont pas actifs en même temps pour faire passer de la puissance mécanique.

Selon un aspect, la roue libre contrôlable peut comporter une portion entraînante et une portion entraînable, la première roue étant solidarisée à la portion entraînante et ledit deuxième pignon étant solidarisé à la portion entraînable.

Le terme « solidarisé » utilisé précédemment signifie que les organes concernés sont fixés l'un à l'autre, ou forment conjointement une seule et même pièce mécanique. Ainsi, la première roue peut être fixée à la portion entraînante par des moyens usuels de visseries, de collage, de rivetage... Alternativement, la première roue et la portion entraînante peuvent représenter deux parties d'une seule et même pièce monolithique.

De même, le deuxième pignon peut être fixé à la portion entraînable par des moyens usuels de visseries, de collage, de rivetage... Alternativement, le deuxième pignon et la portion entraînable peuvent représenter deux parties d'une seule et même pièce monolithique.

Selon un autre aspect, la roue libre contrôlable comportant une portion entraînante et une portion entraînable, le premier arbre peut comprendre des cannelures en prise avec des cannelures de la portion entraînante, ledit deuxième arbre comprenant des cannelures en prise avec des cannelures de la portion entraînable.

L'expression « en prise » signifie que des cannelures engrènent d'autres cannelures.

Selon un autre aspect, le premier axe de roue et le deuxième axe de pignon peuvent être confondus, le premier axe de pignon et ledit deuxième axe de roue étant confondus.

Selon un autre aspect, le premier axe de roue, le deuxième axe de pignon, le premier axe de pignon et le deuxième axe de roue sont parallèles entre eux.

Selon un autre aspect, un produit du premier rapport de vitesse de rotation et du deuxième rapport de vitesse de rotation est inférieur à 1.

Selon un autre aspect le premier rapport de vitesse de rotation peut être égal au quotient d'un nombre de dents du premier pignon divisé par un nombre de dents de la première roue, le deuxième rapport de vitesse de rotation est égal au quotient d'un nombre de dents du deuxième pignon divisé par un nombre de dents de la deuxième roue.

Selon un aspect, le module de transmission de puissance comporte un frein pour freiner le deuxième arbre.

Un tel frein peut notamment être agencé pour freiner une hélice. Alternativement, une telle hélice peut comprendre un tel frein.

L'invention vise aussi un aéronef muni d'une voilure tournante et d'au moins une hélice, l'aéronef ayant au moins un moteur qui entraîne un système de transmission de puissance, ledit système de transmission mettant en mouvement ladite voilure tournante et au moins une hélice.

L'aéronef comporte un module de transmission de puissance selon l'invention, ledit premier arbre étant relié cinématiquement au système de transmission de puissance. Ledit deuxième arbre est relié cinématiquement à ladite hélice, directement ou indirectement via une boîte de transmission de puissance latérale par exemple.

Le système de transmission peut prendre la forme d'une boîte de transmission de puissance, par exemple du type décrit dans le document FR 3040977.

Dès lors, le module de transmission de puissance est fixé à ce système de transmission de puissance ce qui est lui-même mis en mouvement par au moins un moteur.

Sur un giravion, l'autorotation est réalisée sensiblement avec une voilure tournante qui effectue une rotation à une vitesse d'autorotation supérieure à sa vitesse de référence prédéterminée, par exemple à au moins 105 % de cette vitesse de référence.

Sur un aéronef hybride, la voilure tournante peut tourner à une vitesse de rotation relativement faible en raison de la présence d'au moins une hélice, par exemple de l'ordre 90% de cette vitesse de référence. La différence entre la vitesse de rotation du rotor dans une telle phase de vol et la vitesse d'autorotation requise est donc élevée.

Avec le module de transmission de puissance selon l'invention, un pilote peut faire piquer l'aéronef et peut placer les pales de chaque hélice à un pas dit « reverse ». L'hélice peut alors injecter de la puissance via l'organe à différentiel de vitesse dans le système de transmission de puissance. Cet apport de puissance peut permettre d'accélérer la voilure tournante rapidement pour que cette voilure tournante atteigne sa vitesse d'autorotation dans un temps court.

Dans d'autres configurations, cet apport de puissance peut permettre de ralentir l'aéronef, par exemple durant un vol en palier.

Selon un aspect, une roue libre incontrôlable peut être agencée entre ledit au moins un moteur et le système de transmission de puissance.

La roue libre incontrôlable vise à éviter un blocage du système de transmission de puissance en cas de blocage du moteur.

L'invention vise aussi un procédé pour transmettre une puissance dans un aéronef entre une hélice et un système de transmission de puissance de l'aéronef, ledit aéronef ayant au moins un moteur pour mettre en mouvement ledit système de transmission de puissance.

Le procédé comporte une étape d'agencement d'un module de transmission de puissance selon l'invention entre le système de transmission de puissance et ladite hélice, par exemple entre le système de transmission de puissance et une boîte de transmission de puissance intermédiaire débouchant sur ladite hélice.

Selon un aspect, ladite roue libre contrôlable fonctionne soit selon un mode déconnecté durant lequel une portion entraînante de la roue libre contrôlable ne peut en aucun cas mettre en mouvement une portion entraînable de cette roue libre contrôlable soit selon un mode connecté durant lequel la portion entraînante met en rotation la portion entraînable dès qu'une vitesse de rotation de la portion entraînante est supérieure ou égale à une vitesse de rotation de la portion entraînable, ledit embrayage pouvant être dans un mode embrayé ou un mode débrayé.

Le procédé peut comporter un mode de fonctionnement en vol durant lequel l'embrayage est positionné dans le mode débrayé et durant lequel la roue libre contrôlable est positionné dans le mode connecté, afin que l'embrayage soit débrayé et que la roue libre contrôlable soit dans le mode connecté en vol. Le mode de fonctionnement en vol est mis en œuvre en vol, à savoir lorsque l'aéronef ne touche pas le sol, mais aussi au sol soit suite à un vol soit avant un vol.

Dans des conditions normales, dans un mode de fonctionnement en vol une puissance mécanique est donc transmise par le premier arbre au deuxième arbre via la roue libre contrôlable.

En cas de besoin, l'organe à différentiel de vitesse permet de transférer de la puissance du deuxième arbre vers le premier arbre.

Dans un mode de fonctionnement au sol, l'hélice peut être inactive, la roue libre contrôlable étant positionnée dans le mode déconnecté et l'embrayage fonctionnant selon le mode débrayé.

Pour passer dudit mode de fonctionnement en vol à un mode de fonctionnement au sol durant lequel ladite hélice est arrêtée, le procédé peut comporter les étapes suivantes au sol :

- positionnement de l'embrayage dans le mode embrayé, cette étape engendrant l'accélération de l'hélice

- positionnement de la roue libre contrôlable dans le mode déconnecté lorsque ladite hélice a une vitesse de rotation stabilisée,

- positionnement de l'embrayage dans le mode débrayé.

En présence d'un frein au sein du module de transmission de puissance ou de l'hélice, une étape de freinage de l'hélice peut être ensuite entreprise. Cette étape de freinage peut permettre d'arrêter plus rapidement l'hélice et la maintenir à l'arrêt notamment en présence de vent.

Le frein du système peut permettre aussi le freinage de la chaine cinématique complète de l'aéronef: En effet, ce frein qui permet d'arrêter plus rapidement l'hélice peut aussi le cas échéant être utilisé pour arrêter l'ensemble des rotors d'un giravion durant un mode de fonctionnement en vol.

L'expression « lorsque ladite hélice a une vitesse de rotation stabilisée » signifie que l'hélice et le deuxième arbre effectuent une rotation à une vitesse sensiblement constante, à savoir comprise dans une plage de vitesse, pendant une durée prédéterminée ou selon une accélération nulle.

Pour passer du mode de fonctionnement au sol vers le mode de fonctionnement en vol, suite à un arrêt de l'hélice, lorsque la roue libre contrôlable est dans le mode déconnecté et l'embrayage dans le mode débrayé, le procédé comporte les étapes suivantes au sol pour mettre en rotation ladite hélice :

- positionnement de l'embrayage dans le mode embrayé,

- positionnement de la roue libre contrôlable dans le mode connecté lorsque ladite hélice a une vitesse de rotation stabilisée,

- positionnement de l'embrayage dans le mode débrayé.

L'invention et ses avantages apparaîtront avec plus de détails dans le cadre de la description qui suit avec des exemples donnés à titre illustratif en référence aux figures annexées qui représentent :

- la figure 1, un schéma illustrant un module de transmission de puissance,

- la figure 2, une coupe d'un module de transmission de puissance du type de la figure 1,

- les figures 3 et 4, des schémas illustrant des modules de transmission de puissance, et

- la figure 5, un schéma illustrant un aéronef muni d'un module de transmission de puissance selon l'invention.

Les éléments présents dans plusieurs figures distinctes sont affectés d'une seule et même référence.

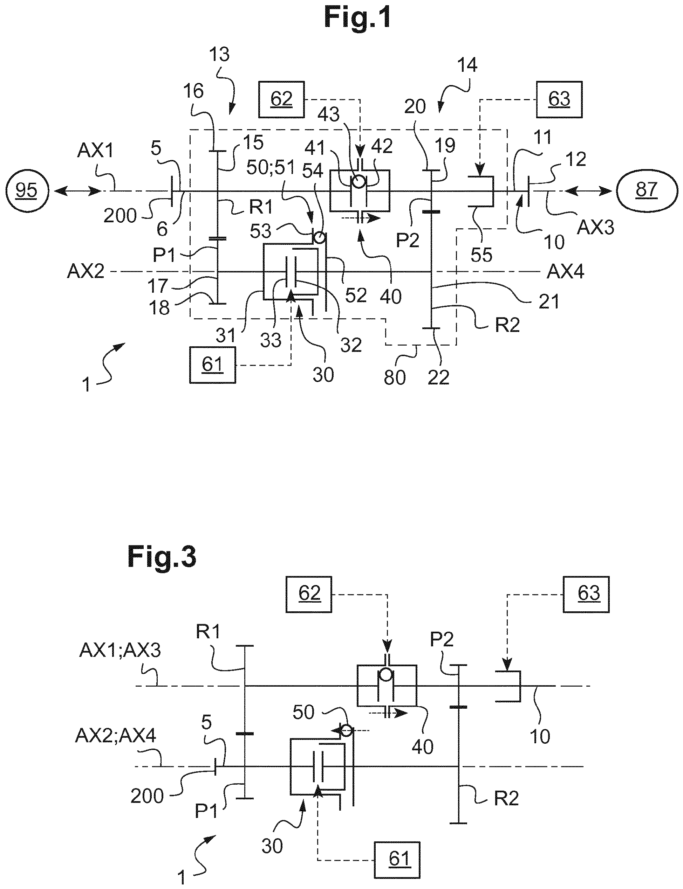

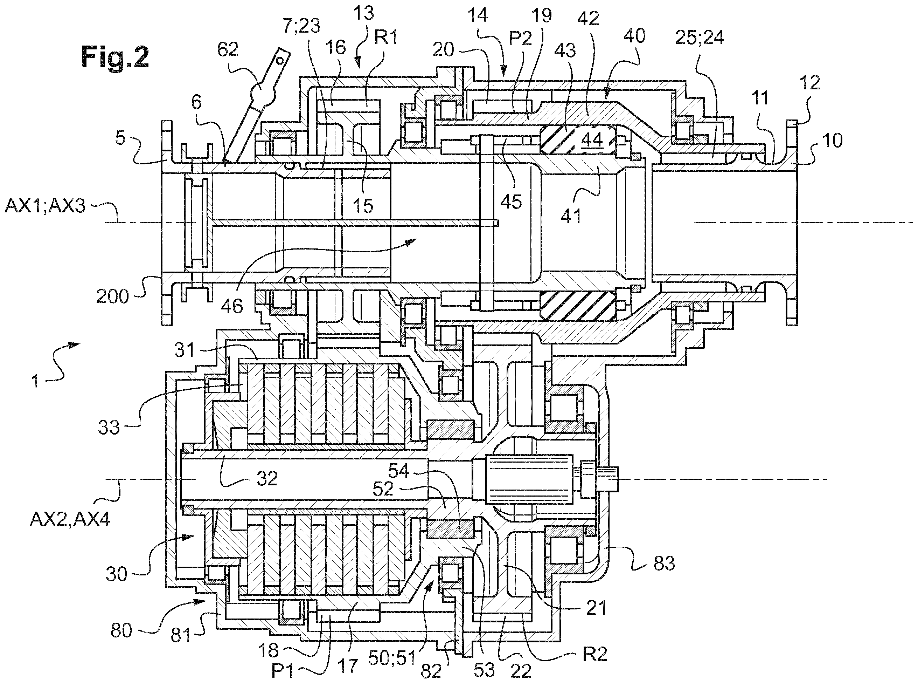

La figure 1 illustre un module de transmission de puissance 1 selon l'invention, la figure 2 présentant une coupe d'un module de transmission de puissance 1 de ce type.

Quelle que soit la réalisation, le module de transmission de puissance 1 est muni d'un premier arbre 5. Le premier arbre 5 est apte à être relié à un système de transmission de puissance 95. Ainsi, le premier arbre 5 peut comprendre un premier tube principal 6 débouchant sur un moyen de liaison 200 pouvant être relié à un ensemble mécanique. Un tel moyen de liaison peut comprendre des cannelures, un flasque...

De plus, le module de transmission de puissance 1 est muni d'un deuxième arbre 10. Le deuxième arbre 10 est apte à être relié à un système mécanique tournant et notamment une hélice. Le terme « hélice » désigne une hélice propulsive ou tractive en tant que telle ou encore un rotor et par exemple un rotor de contrôle du mouvement en lacet d'un aéronef. Ainsi, le deuxième arbre 10 peut comprendre un deuxième tube principal 11 débouchant sur un organe de liaison 12 pouvant être relié à un ensemble mécanique. Un tel organe de liaison 12 peut comprendre des cannelures, un flasque...

Le premier arbre 5 est alors relié cinématiquement au deuxième arbre 10 par trois lignes cinématiques. Une première et une deuxième lignes cinématiques permettent selon la phase de fonctionnement de transmettre sur commande une puissance mécanique du premier arbre 5 vers le deuxième arbre 10, et une troisième ligne cinématique permet de transmettre une puissance mécanique du deuxième arbre 10 vers le premier arbre 5. Ces trois lignes cinématiques peuvent aussi empêcher le transfert de puissance du premier arbre 5 vers le deuxième arbre 10.

Ainsi, le module de transmission de puissance comporte un premier étage d'engrenage 13 ayant un premier rapport de vitesse de rotation A. Le premier étage d'engrenage 13 comprend une première roue R1 mobile en rotation sur elle-même autour d'un premier axe de roue AX1. La première roue R1 possède un premier corps de roue 15 portant un premier nombre Z1 de dents 16.

De plus, le premier étage d'engrenage 13 comprend un premier pignon P1 mobile en rotation sur lui-même autour d'un premier axe de pignon AX2. Le premier pignon P1 possède un premier corps de pignon 17 portant un deuxième nombre Z3 de dents 18. Les dents 18 du premier pignon P1 sont en prise avec les dents 16 de la première roue R1. Le deuxième nombre Z3 de dents 18 peut être inférieur ou égal au premier nombre Z1 de dents 16.

Le premier rapport de vitesse de rotation A est alors égal au quotient du deuxième nombre Z3 de dents du premier pignon P1 divisé par le premier nombre Z1 de dents de la première roue R1 soit $A = \frac{Z3}{Z1}$.

En outre, le premier axe de roue AX1 et ledit premier axe de pignon AX2 sont favorablement parallèles.

Par ailleurs, selon la figure 3 le premier arbre 5 est solidaire en rotation du premier pignon P1 autour du premier axe de pignon AX2. Néanmoins, et selon la figure 1, le premier arbre 5 peut être solidaire en rotation de la première roue R1 autour du premier axe de roue AX1.

Eventuellement, des cannelures permettent de lier en rotation le premier arbre au premier pignon ou à la première roue selon la variante. Ainsi, et en référence à la figure 2, le premier arbre 5 peut comprendre des cannelures 7 en prise avec des cannelures 23 solidaires en rotation de la première roue R1 autour du premier axe de roue AX1. De manière alternative, le premier pignon et le premier arbre ou la première roue et le premier arbre forment par exemple une seule et même pièce monolithique.

En référence à la figure 1, le module de transmission de puissance 1 comporte un deuxième étage d'engrenage 14 ayant un deuxième rapport de vitesse de rotation B. Le deuxième étage d'engrenage 14 comprend une deuxième roue R2 mobile en rotation sur elle-même autour d'un deuxième axe de roue AX4. La deuxième roue R2 possède un deuxième corps de roue 21 portant un troisième nombre Z4 de dents 22.

De plus, le deuxième étage d'engrenage 14 comprend un deuxième pignon P2 mobile en rotation sur lui-même autour d'un deuxième axe de pignon AX3. Le deuxième pignon P2 possède un deuxième corps de pignon 19 portant un quatrième nombre Z2 de dents 20. Les dents 20 du deuxième pignon P2 sont en prise avec les dents 22 de la deuxième roue R2. Le quatrième nombre Z2 de dents 20 peut être inférieur au troisième nombre Z4 de dents 22.

Le deuxième rapport de vitesse de rotation B est alors égal au quotient du quatrième nombre Z2 de dents du deuxième pignon P2 divisé par le troisième nombre Z4 de dents de la deuxième roue R2 soit

$$B = \frac{Z2}{Z4}.$$

Le premier rapport de vitesse de rotation A et le deuxième rapport de vitesse de rotation B sont différents. Par exemple, le produit du premier rapport de vitesse de rotation A et du deuxième rapport de vitesse de rotation B est inférieur à 1 soit : A*B<1 où « * » représente le signe de la multiplication.

Selon un exemple, le deuxième pignon P2 comporte une dent de moins que la première roue R1, que le premier pignon P1 et que la deuxième roue R2.

Selon un exemple, le quatrième nombre Z2 de dents 20 peut être inférieur au premier nombre Z1 de dents 16, et le troisième nombre Z4 de dents 22 est égal au deuxième nombre Z3 de dents 18.

En outre, le deuxième axe de roue AX4 et ledit deuxième axe de pignon AX3 sont par exemple parallèles. Le premier axe de roue AX1 et le deuxième axe de pignon AX3 sont éventuellement confondus, le premier axe de pignon AX2 et le deuxième axe de roue AX4 étant confondus. Dès lors, le premier axe de roue AX1, le deuxième axe de pignon AX3, le premier axe de pignon AX2 et le deuxième axe de roue AX4 sont éventuellement parallèles.

Par ailleurs, le deuxième arbre 10 est solidaire en rotation du deuxième pignon P2 autour du deuxième axe de pignon AX3. Eventuellement, des cannelures permettent de lier en rotation le deuxième arbre 10 au deuxième pignon P2. Ainsi, et en référence à la figure 2, le deuxième arbre 10 peut comprendre des cannelures 25 en prise avec des cannelures 24 solidaires en rotation du deuxième pignon P2 autour du deuxième axe de pignon. De manière alternative, le deuxième pignon et le deuxième arbre forment par exemple une seule et même pièce monolithique.

Par ailleurs, le module de transmission de puissance 1 est muni d'une première chaine cinématique reliant le premier pignon P1 à la deuxième roue R2 pour former ladite première ligne cinématique. Cette première chaîne cinématique est munie d'un embrayage 30 par exemple à friction. De manière usuelle, l'embrayage comporte un premier organe 31 et un deuxième organe 32 qui peuvent être liés en rotation par un organe de liaison 33 commandé par un signal provenant d'une commande d'embrayage 61. Ainsi l'organe de liaison 33 peut être sollicité dans un mode embrayé pour lier en rotation le premier organe 31 et le deuxième organe 32. A l'inverse, l'organe de liaison 33 peut être sollicité dans un mode débrayé pour désolidariser le premier organe 31 et le deuxième organe 32.

En outre, le premier organe 31 est solidaire en rotation du premier pignon P1 autour du premier axe de pignon AX2, et le deuxième organe 32 est solidaire en rotation de la deuxième roue R2 autour du deuxième axe de roue AX4. Ainsi, dans le mode embrayé une rotation du premier pignon P1 induit une rotation de la deuxième roue R2 via l'embrayage, et inversement.

Selon la figure 2, le premier organe 31 peut inclure un premier tube dit « premier tube d'embrayage », le premier pignon P1 et le premier tube d'embrayage formant par exemple une seule et même pièce monolithique. De manière alternative, le premier tube d'embrayage peut être fixé au premier pignon P1, le premier pignon P1 étant par exemple fixé à une périphérie du premier tube d'embrayage.

De même, le deuxième organe 32 peut inclure un deuxième tube dit « deuxième tube d'embrayage », la deuxième roue R2 et le deuxième tube d'embrayage formant par exemple une seule et même pièce monolithique. De manière alternative, le deuxième tube d'embrayage peut être solidarisé à la deuxième roue R2, la deuxième roue R2 étant par exemple fixée à une périphérie du deuxième tube d'embrayage.

Par ailleurs et en référence à la figure 1, le module de transmission de puissance 1 est muni d'une deuxième chaine cinématique reliant la première roue R1 au deuxième pignon P2 pour former ladite deuxième ligne cinématique. Cette deuxième chaine cinématique est munie d'une roue libre contrôlable 40.

La roue libre contrôlable 40 comporte une portion entraînante 41, une portion entraînable 42, et un moyen de connexion 43 apte à connecter ou à déconnecter cette portion entraînante 41 de la portion entraînable 42 sur requête d'un signal provenant d'une commande de roue libre 62. La portion entraînante 41 est solidaire en rotation de la première roue R1 autour du premier axe de roue AX1, et la portion entraînable 42 est solidaire en rotation du deuxième pignon P2 autour du deuxième axe de pignon AX3.

Selon la figure 2, la portion entraînante 41 peut inclure un premier tube dit « premier tube de roulement » solidarisé à la première roue R1. La première roue R1 et la portion entraînante 41 sont par exemple des parties d'une même pièce mécanique monolithique. De manière alternative, la première roue R1 peut être fixée à une périphérie du premier tube de roulement, ce premier tube de roulement étant solidarisé en rotation au premier arbre éventuellement via des cannelures.

De même, la portion entraînable 42 peut inclure un deuxième tube dit « deuxième tube de roulement » solidarisé au deuxième pignon P2. Le deuxième pignon P2 et la portion entraînable 42 sont des parties d'une même pièce mécanique monolithique. De manière alternative, le deuxième pignon P2 peut être fixé à une périphérie du deuxième tube de roulement, ce deuxième tube de roulement étant solidarisé au deuxième arbre éventuellement via des cannelures.

Par ailleurs, la portion entraînante 41 peut comprendre des rampes de coincement. Le moyen de connexion 43 peut comprendre une pluralité de moyens de liaison de type galets 44 ou équivalents disposés dans une cage 45. Cette cage 45 est mobile en pouvant être déplacé par un système 46 commandé par un signal provenant d'une commande de roue libre 62. Par exemple, l'enseignement du document FR 2670553 est applicable.

Durant un mode déconnecté non représenté, le moyen de connexion 43 est dans une position l'empêchant de lier en rotation la portion entraînante 41 et la portion entraînable 42. De fait, la portion entraînante 41 et la portion entraînable 42 sont désolidarisées en rotation durant ce mode déconnecté, les galets n'étant pas agencés sur les rampes de coincement.

Durant un mode connecté représenté sur la figure 2, le moyen de connexion 43 est déplacé, les galets étant disposés sur les rampes de coincement. La portion entraînante 41 de la roue libre contrôlable met alors en rotation la portion entraînable 42 d'une part quand la roue libre contrôlable est en mode connecté et, d'autre part dès que la vitesse de rotation de la portion entraînante 41 devient supérieure ou égale à la vitesse de rotation de la portion entraînable 42.

Par ailleurs et en référence à la figure 1, le module de transmission de puissance 1 peut comprendre un frein 55 pour freiner le deuxième arbre 10 sur requête d'une commande de frein 63. Un tel frein est par exemple un frein à disque.

Selon un autre aspect, le module de transmission de puissance 1 peut comprendre un carter 80, le premier arbre 5 et le deuxième arbre 10 saillant en dehors du carter 80.

Par ailleurs, le module de transmission de puissance 1 comporte un organe à différentiel de vitesse 50. Cet organe à différentiel de vitesse 50 est positionné cinématiquement entre le premier arbre 5 et le deuxième arbre 10 pour ménager ladite troisième ligne cinématique. Cette troisième ligne cinématique permet au deuxième arbre 10 d'induire la rotation du premier arbre 5 lorsque le deuxième arbre 10 présente une vitesse de rotation supérieure à une vitesse de rotation de la première roue R1 voire du premier arbre 5 et lorsque simultanément l'embrayage 30 est positionné dans un mode débrayé.

Cet organe à différentiel de vitesse 50 peut inclure une roue libre incontrôlable 51 qui fonctionne uniquement selon un unique mode connecté. Cette roue libre incontrôlable 51 comprend une partie menante 52 qui met en rotation une partie menée 53, par le biais d'organes de roulement 54, lorsqu'une vitesse de rotation de la partie menante 52 est supérieure ou égale à une vitesse de rotation de la partie menée 53. La partie menante est reliée au deuxième arbre 10, pour qu'une rotation du deuxième arbre induise obligatoirement une rotation de la partie menante et inversement. La partie menée est reliée au premier arbre 5 pour qu'une rotation du premier arbre induise obligatoirement une rotation de la partie menée et inversement. La roue libre incontrôlable est une roue libre usuelle qui n'a pas besoin d'être décrite dans le détail.

Selon la première réalisation de la figure 1, l'organe à différentiel de vitesse 50 est agencé en parallèle de l'embrayage 30. Un premier organe de l'organe à différentiel de vitesse 50 formant la partie menante 52 est solidaire en rotation de la deuxième roue R2 autour du deuxième axe de roue AX4. Un deuxième organe de l'organe à différentiel de vitesse 50 formant la partie menée 53 est solidaire en rotation du premier pignon P1 autour du premier axe de pignon AX2.

Selon la variante de la figure 2, un unique tube présente longitudinalement et successivement un premier tronçon formant ladite partie menée 53 de l'organe à différentiel de vitesse 50 et un deuxième tronçon formant l'organe menant de l'embrayage. De plus, le premier tronçon comprend une excroissance radiale formant le premier pignon P1. Alternativement, le premier pignon peut être fixé au premier tronçon.

De même, un tube peut présenter longitudinalement et successivement un premier tronçon formant le premier organe 31 de l'embrayage, puis un deuxième tronçon formant ladite partie menante 52 de l'organe à différentiel de vitesse 50, puis un troisième tronçon muni de la deuxième roue R2.

On note en outre, que le carter 80 peut comprendre divers sous-ensembles 81, 82, 83, et divers organes de roulement servant de guide de positionnement.

La figure 3 illustre une variante de la figure 1 pour laquelle le premier arbre 5 est solidaire du premier pignon P1 autour du premier axe de pignon AX2.

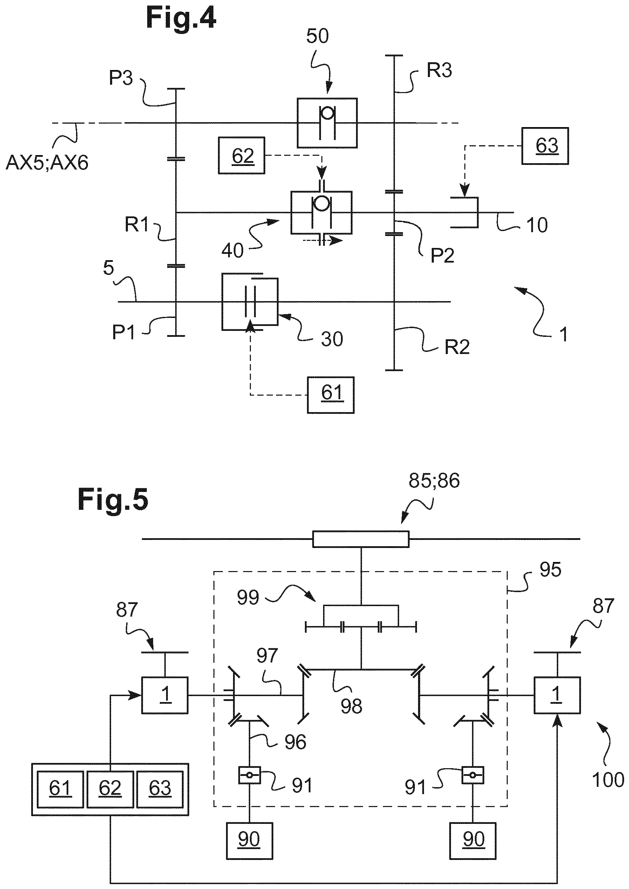

La figure 4 illustre une deuxième réalisation. Selon cette deuxième réalisation, le module de transmission de puissance 1 comporte une troisième roue R3. La troisième roue R3 comporte des dents en prise sur les dents du deuxième pignon P2. La troisième roue R3 est mobile en rotation sur elle-même autour d'un troisième axe de roue AX5.

De plus, un troisième pignon P3 comporte des dents en prise sur la première roue R1. Le troisième pignon P3 est mobile en rotation sur lui-même autour d'un troisième axe de pignon AX6.

Eventuellement, la troisième roue R3 est identique à la deuxième roue R2, et le troisième pignon P3 est identique au premier pignon P1.

Selon un exemple, le deuxième pignon P2 comporte une dent de moins que la première roue R1, que le premier pignon P1, que la deuxième roue R2, que la troisième roue R3 et que le troisième pignon P3

Dès lors, l'organe à différentiel de vitesse 50 comprend selon la deuxième réalisation une partie menante 52 solidaire en rotation de la troisième roue R3 autour du troisième axe de roue AX5, et une partie menée 53 solidaire en rotation du troisième pignon P3 autour du troisième axe de pignon AX6.

Quelle que soit la réalisation, le module de transmission de puissance 1 peut être agencé sur tous types de systèmes mécaniques, et notamment des systèmes mécaniques requérant le transfert de puissance mécanique entre deux ensembles de manière bidirectionnelle et dans des conditions particulières.

En référence à la figure 5, le module de transmission de puissance peut être agencé sur un aéronef 100 qui est muni d'une voilure tournante 85. La voilure tournante comporte au moins un rotor 86.

En particulier, l'aéronef peut être muni d'au moins une hélice 87, et de deux hélices 87 selon l'exemple présenté.

Cet aéronef comporte au moins un moteur 90 qui entraîne un système de transmission de puissance 95, ce système de transmission de puissance 95 mettant en mouvement la voilure tournante 85 et chaque hélice 87. Par exemple, le système de transmission de puissance 95 comporte un arbre d'entrée 96 par moteur, chaque arbre d'entrée étant relié à un moteur 90 par une roue libre 91 classique. Cet arbre d'entrée 96 met en mouvement la voilure tournante et au moins une hélice via divers engrenages, tel qu'un pignon double 97, une roue de conjugaison 98, un train d'engrenage épicycloïdal 99.. Par exemple, l'arbre d'entrée entraîne en rotation un pignon double 97 qui engrène une roue de conjugaison 98. Cette roue de conjugaison 98 entraîne alors un train d'engrenage épicycloïdal 99 relié à la voilure tournante. De plus, le pignon double 97 peut comporter un moyen de connexion réversible pour être relié si besoin à une hélice 87 via un module de transmission de puissance 1 selon l'invention. Le premier arbre 5 peut alors être solidarisé au pignon double 97, ou peut être fixé à un arbre relié au pignon double 97.

Le premier arbre 5 de chaque module de transmission de puissance 1 peut ainsi être relié au système de transmission de puissance 95, et le deuxième arbre 10 peut être relié à une hélice 87.

Selon un autre aspect et en référence à la figure 1, la commande d'embrayage 61 peut prendre la forme d'un bouton relié à l'embrayage. De même, la commande de roue libre 62 peut prendre la forme d'un bouton relié à la roue libre contrôlable et la commande de frein 63 peut prendre la forme d'un bouton relié au frein. Le terme « bouton » couvre tout type de commande manœuvrable par un pilote, par exemple un écran tactile, un bouton à poussoir, un bouton rotatif, un bouton basculant...

De manière alternative, la commande d'embrayage 61, et/ou la commande de roue libre 62 et/ou la commande de frein 63 peuvent prendre la forme de parties d'un calculateur. Ce calculateur peut être couplé à des capteurs pour déterminer les ordres à transmettre, et/ou peut élaborer lesdits ordres en fonction d'instructions données par un pilote. Par exemple, un pilote peut requérir le fonctionnement du module de transmission de puissance 1 selon un mode vol ou un mode sol.

En vol, l'embrayage 30 est positionné dans le mode débrayé et la roue libre contrôlable 40 est positionnée dans le mode connecté.

Dès lors, hors cas de panne, le système de transmission de puissance 1 met en rotation le premier arbre 5. Ce premier arbre 5 met en rotation le deuxième arbre 10 via notamment et successivement la première roue R1, la roue libre contrôlable 40 et le deuxième pignon P2.

En cas de panne moteur, le deuxième arbre peut effectuer une rotation à une vitesse supérieure à une vitesse de rotation du premier arbre en raison des efforts aérodynamiques exercés sur l'hélice. Ce deuxième arbre met alors en rotation le premier arbre 5 via l'organe à différentiel de vitesse 50.

Pour passer dudit mode de fonctionnement en vol à un mode de fonctionnement au sol, l'embrayage 30 peut être positionné dans le mode embrayé. Le deuxième arbre accélère en raison des rapports de vitesse des engrenages du module de transmission de puissance 1. Le deuxième arbre effectue alors une rotation à une vitesse supérieure à la vitesse de rotation du premier arbre. La roue libre contrôlable principal 40 est alors glissante.

Dès lors, la roue libre contrôlable 40 est positionnée dans le mode déconnecté lorsque l'hélice 87 a une vitesse de rotation stabilisée.

L'embrayage 30 est ensuite placé dans le mode débrayé, puis l'hélice est éventuellement freinée.

Pour passer dudit mode de fonctionnement au sol à un mode de fonctionnement en vol, l'embrayage 30 peut être positionné dans le mode embrayé.

Dès lors, la roue libre contrôlable 40 est positionnée dans le mode connecté lorsque ladite hélice 87 a une vitesse de rotation stabilisée.

L'embrayage 30 est ensuite placé dans le mode débrayé. La puissance fournie par au moins un moteur peut être transmise à l'hélice.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Module de transmission de puissance (1) muni d'un premier arbre (5) et un deuxième arbre (10), ledit premier arbre (5) étant apte à être relié à un système de transmission de puissance (95) qui entraîne une voilure tournante (85) et qui est entraîné par au moins un moteur (90), ledit deuxième arbre (10) étant apte à être relié mécaniquement à une hélice (87), ledit module de transmission de puissance (1) comprenant un premier étage d'engrenage (13) et un deuxième étage d'engrenage (14) ayant respectivement un premier rapport de vitesse de rotation (A) et un deuxième rapport de vitesse de rotation (B) différents, le premier étage d'engrenage (13) comprenant une première roue (R1) mobile en rotation autour d'un premier axe de roue (AX1) et un premier pignon (P1) mobile en rotation autour d'un premier axe de pignon (AX2), le deuxième étage d'engrenage (14) comprenant une deuxième roue (R2) mobile en rotation autour d'un deuxième axe de roue (AX4) et un deuxième pignon (P2) mobile en rotation autour d'un deuxième axe de pignon (AX3), le deuxième arbre (10) étant solidaire en rotation du deuxième pignon (P2) autour du deuxième axe de pignon (AX3), un embrayage (30) reliant le premier pignon (P1) à la deuxième roue (R2), une roue libre contrôlable (40) reliant la première roue (R1) au deuxième pignon (P2),
**caractérisé en ce que** le premier arbre (5) étant solidaire en rotation du premier pignon (P1) autour du premier axe de pignon (AX2) ou étant solidaire en rotation de la première roue (R1) autour du premier axe de roue (AX1), ledit module de transmission de puissance (1) comporte un organe à différentiel de vitesse (50) agencé fonctionnellement entre le premier arbre (5) et le deuxième arbre (10) pour que le deuxième arbre (10) induise la rotation du premier arbre (5) lorsque le deuxième arbre (10) présente une vitesse de rotation supérieure à une vitesse de rotation de la première roue (R1) et lorsque simultanément l'embrayage (30) est dans un mode débrayé.

2. Module de transmission de puissance selon la revendication 1,
**caractérisé en ce que** ladite roue libre contrôlable (40) fonctionne soit selon un mode déconnecté durant lequel une portion entraînante (41) de la roue libre contrôlable (40) ne peut en aucun cas mettre en mouvement une portion entraînable (42) de cette roue libre contrôlable (40), soit selon un mode connecté durant lequel la portion entraînante (41) met en rotation la portion entraînable (42) dès qu'une vitesse de rotation de la portion entraînante (41) devient supérieure ou égale à une vitesse de rotation de la portion entraînable (42) alors qu'à l'inverse la portion entraînante (41) n'est pas apte à mettre en rotation ladite portion entraînable (42) lorsque la vitesse de rotation de la portion entraînante (41) est inférieure à la vitesse de rotation de la portion entraînable (42).

3. Module de transmission de puissance selon l'une quelconque des revendications 1 à 2,
**caractérisé en ce que** ledit organe à différentiel de vitesse (50) inclut une roue libre incontrôlable (51) qui fonctionne selon un unique mode durant lequel une partie menante (52) de la roue libre incontrôlable (51) met en rotation une partie menée (53) de la roue libre incontrôlable (51) lorsqu'une vitesse de rotation de la partie menante est supérieure ou égale à une vitesse de rotation de la partie menée.

4. Module de transmission de puissance selon l'une quelconque des revendications 1 à 3,
**caractérisé en ce que** ledit organe à différentiel de vitesse (50) est agencé en parallèle de l'embrayage (30), ledit organe à différentiel de vitesse (50) incluant un premier organe (52) et un deuxième organe (53), le premier organe (52) étant solidaire en rotation de la deuxième roue (R2) autour du deuxième axe de roue (AX4), le deuxième organe (53) étant solidaire en rotation du premier pignon (P1) autour du premier axe de pignon (AX2).

5. Module de transmission de puissance selon l'une quelconque des revendications 1 à 3,
**caractérisé en ce que** ledit module de transmission de puissance (1) comporte une troisième roue (R3) en prise sur le deuxième pignon (P2) et un troisième pignon (P3) en prise sur la première roue (R1), la troisième roue (R3) étant mobile en rotation autour d'un troisième axe de roue (AX5), le troisième pignon (P3) étant mobile en rotation autour d'un troisième axe de pignon (AX6), ledit organe à différentiel de vitesse (50) comprenant une partie menante (52) solidaire en rotation de la troisième roue (R3) autour du troisième axe de roue (AX5), ledit organe à différentiel de vitesse (50) comprenant une partie menée (53) solidaire en rotation du troisième pignon (P3) autour du troisième axe de pignon (AX6).

6. Module de transmission de puissance selon l'une quelconque des revendications 1 à 5,

**caractérisé en ce que** ladite roue libre contrôlable (40) comportant une portion entraînante (41) et une portion entraînable (42), ladite première roue (R1) est solidarisée à la portion entraînante (41) et ledit deuxième pignon (P2) est solidarisé à la portion entraînable (42).

7. Module de transmission de puissance selon l'une quelconque des revendications 1 à 6, **caractérisé en ce que** ladite roue libre contrôlable (40) comportant une portion entraînante (41) et une portion entraînable (42), ledit premier arbre (5) comprend des cannelures (7) en prise avec des cannelures (23) de la portion entraînante (41), ledit deuxième arbre comprenant des cannelures (25) en prise avec des cannelures (24) de la portion entraînable (42).

8. Module de transmission de puissance selon l'une quelconque des revendications 1 à 7, **caractérisé en ce que** ledit premier axe de roue (AX1) et ledit deuxième axe de pignon (AX3) sont confondus, ledit premier axe de pignon (AX2) et ledit deuxième axe de roue (AX4) étant confondus.

9. Module de transmission de puissance selon l'une quelconque des revendications 1 à 8, **caractérisé en ce que** ledit premier axe de roue (AX1), ledit deuxième axe de pignon (AX3), ledit premier axe de pignon (AX2) et ledit deuxième axe de roue (AX4) sont parallèles entre eux.

10. Module de transmission de puissance selon l'une quelconque des revendications 1 à 9, **caractérisé en ce qu'**un produit du premier rapport de vitesse de rotation (A) et du deuxième rapport de vitesse de rotation (B) est inférieur à 1.

11. Module de transmission de puissance selon l'une quelconque des revendications 1 à 10, **caractérisé en ce que** le premier rapport de vitesse de rotation (A) est égal au quotient d'un nombre de dents (Z3) du premier pignon (P1) divisé par un nombre de dents (Z1) de la première roue (R1), le deuxième rapport de vitesse de rotation (B) est égal au quotient d'un nombre de dents (Z2) du deuxième pignon (P2) divisé par un nombre de dents (Z4) de la deuxième roue (R2).

12. Module de transmission de puissance selon l'une quelconque des revendications 1 à 11, **caractérisé en ce que** ledit module de transmission de puissance (1) comporte un frein (55) pour freiner le deuxième arbre (10).

13. Aéronef (100) muni d'une voilure tournante (85) et d'au moins une hélice (87), ledit aéronef (100) ayant au moins un moteur (90) qui entraîne un système de transmission de puissance (95), ledit système de transmission de puissance (95) mettant en mouvement ladite voilure tournante (85) et au moins une hélice (87), **caractérisé en ce que** ledit aéronef (100) comporte un module de transmission de puissance (1) selon l'une quelconque des revendications 1 à 12, ledit premier arbre (5) étant relié cinématiquement au système de transmission de puissance (95), ledit deuxième arbre (10) étant relié cinématiquement à ladite hélice (87).

14. Aéronef selon la revendication 13, **caractérisé en ce qu'**une roue libre incontrôlable (91) est agencée entre ledit au moins un moteur (90) et le système de transmission de puissance (95).

15. Procédé pour transmettre une puissance dans un aéronef (100) entre une hélice (87) et un système de transmission de puissance (95) de l'aéronef (100), ledit aéronef (100) ayant au moins un moteur (90) pour mettre en mouvement ledit système de transmission de puissance (95), **caractérisé en ce que** ledit procédé comporte une étape d'agencement d'un module de transmission de puissance (1) selon l'une quelconque des revendications à 1 à 12 entre le système de transmission de puissance (95) et ladite hélice (87).

16. Procédé selon la revendication 15, **caractérisé en ce que**, ladite roue libre contrôlable (40) fonctionnant soit selon un mode déconnecté durant lequel une portion entraînante (41) de la roue libre contrôlable (40) ne peut en aucun cas mettre en mouvement une portion entraînable (42) de cette roue libre contrôlable (40) soit selon un mode connecté durant lequel la portion entraînante (41) met en rotation la portion entraînable (42) dès qu'une vitesse de rotation de la portion entraînante (41) est supérieure ou égale à une vitesse de rotation de la portion entraînable (42), ledit embrayage (30) pouvant être dans un mode embrayé ou un mode débrayé, ledit procédé comporte un mode de fonctionnement en vol durant lequel l'embrayage (30) est positionné dans le mode débrayé et durant lequel la roue libre contrôlable (40) est positionnée dans le mode connecté afin que l'embrayage (30) soit débrayé et que la roue libre contrôlable (40) soit dans le mode connecté en vol.

17. Procédé selon la revendication 16, **caractérisé en ce que** pour passer dudit mode de fonctionnement en vol à un mode de fonctionnement au sol durant lequel ladite hélice (87) est arrêtée, le procédé comporte les étapes suivantes au sol :

   - positionnement de l'embrayage (30) dans le mode embrayé,

- positionnement de la roue libre contrôlable (40) dans le mode déconnecté lorsque ladite hélice (87) a une vitesse de rotation stabilisée,
- positionnement de l'embrayage (30) dans le mode débrayé.

18. Procédé selon l'une quelconque des revendications 15 à 17,
**caractérisé en ce que** ladite roue libre contrôlable (40) fonctionnant soit selon un mode déconnecté durant lequel une portion entraînante (41) de la roue libre contrôlable (40) ne peut en aucun cas mettre en mouvement une portion entraînable (42) de cette roue libre contrôlable (40) soit selon un mode connecté durant lequel la portion entraînante (41) met en rotation la portion entraînable (42) dès qu'une vitesse de rotation de la portion entraînante (41) est supérieure ou égale à une vitesse de rotation de la portion entraînable (42), ledit embrayage (30) pouvant être dans un mode embrayé ou un mode débrayé, suite à un arrêt de l'hélice (87), lorsque la roue libre contrôlable est dans le mode déconnecté et l'embrayage dans le mode débrayé, le procédé comporte les étapes suivantes au sol pour mettre en rotation ladite hélice (87) :

- positionnement de l'embrayage (30) dans le mode embrayé,
- positionnement de la roue libre contrôlable (40) dans le mode connecté lorsque ladite hélice (87) a une vitesse de rotation stabilisée,
- positionnement de l'embrayage (30) dans le mode débrayé.

**Patentansprüche**

1. Leistungsübertragungsmodul (1) mit einer ersten Welle (5) und einer zweiten Welle (10), wobei die erste Welle (5) geeignet ist, mit einem Leistungsübertragungssystem (95) verbunden zu werden, das einen Drehflügel (85) antreibt und das von mindestens einem Motor (90) angetrieben wird, wobei die zweite Welle (10) geeignet ist, mechanisch mit einem Propeller (87) verbunden zu werden, wobei das Leistungsübertragungsmodul (1) eine erste Getriebestufe (13) und eine zweite Getriebestufe (14) mit jeweils einem ersten Drehzahlverhältnis (A) und einem zweiten Drehzahlverhältnis (B), die sich unterscheiden, umfasst, wobei die erste Getriebestufe (13) ein erstes Rad (R1), das um eine erste Radachse (AX1) drehbar ist, und ein erstes Ritzel (P1), das um eine erste Ritzelachse (AX2) drehbar ist, umfasst, wobei die zweite Getriebestufe (14) ein zweites Rad (R2), das um eine zweite Radachse (AX4) drehbar ist, und ein zweites Ritzel (P2), das um eine zweite Ritzelachse (AX3) drehbar ist, umfasst, wobei die zweite Welle (10) mit dem zweiten Ritzel (P2) in Drehung um die zweite Ritzelachse (AX3) fest verbunden ist, eine Kupplung (30) das erste Ritzel (P1) mit dem zweiten Rad (R2) verbindet, und ein steuerbarer Freilauf (40) das erste Rad (R1) mit dem zweiten Ritzel (P2) verbindet,
**dadurch gekennzeichnet, dass** die erste Welle (5) mit dem ersten Ritzel (P1) in Drehung um die erste Ritzelachse (AX2) fest verbunden ist oder mit dem ersten Rad (R1) in Drehung um die erste Radachse (AX1) fest verbunden ist, das Leistungsübertragungsmodul (1) ein Drehzahldifferenzelement (50) beinhaltet, das funktionell zwischen der ersten Welle (5) und der zweiten Welle (10) angeordnet ist, so dass die zweite Welle (10) eine Drehung der ersten Welle (5) induziert, wenn die zweite Welle (10) eine Drehzahl aufweist, die höher als eine Drehzahl des ersten Rades (R1) ist, und wenn gleichzeitig die Kupplung (30) in einem ausgekuppelten Modus ist.

2. Leistungsübertragungsmodul nach Anspruch 1,
**dadurch gekennzeichnet, dass** der steuerbare Freilauf (40) entweder in einem abgetrennten Modus, in dem ein Antriebsabschnitt (41) des steuerbaren Freilaufs (40) in keinem Fall einen antreibbaren Abschnitt (42) des steuerbaren Freilaufs (40) in Bewegung setzen kann, oder in einem verbundenen Modus arbeitet, in dem der Antriebsabschnitt (41) den antreibbaren Abschnitt (42) dreht, sobald eine Drehzahl des Antriebsabschnitts (41) höher als oder gleich einer Drehzahl des antreibbaren Abschnitts (42) ist, während umgekehrt der Antriebsabschnitt (41) nicht in der Lage ist, den antreibbaren Abschnitt (42) zu drehen, wenn die Drehzahl des Antriebsabschnitts (41) niedriger als die Drehzahl des antreibbaren Abschnitts (42) ist.

3. Leistungsübertragungsmodul nach einem der Ansprüche 1 bis 2,
**dadurch gekennzeichnet, dass** das Drehzahldifferenzelement (50) einen nicht steuerbaren Freilauf (51) umfasst, der in einem einzigen Modus arbeitet, in dem ein Führungsabschnitt (52) des nicht steuerbaren Freilaufs (51) einen geführten Abschnitt (53) des nicht steuerbaren Freilaufs (51) dreht, wenn eine Drehzahl des Führungsabschnitts größer als oder gleich einer Drehzahl des geführten Abschnitts ist.

4. Leistungsübertragungsmodul nach einem der Ansprüche 1 bis 3,
**dadurch gekennzeichnet, dass** das Drehzahldifferenzelement (50) parallel zur Kupplung (30) angeordnet ist, dass das Drehzahldifferenzelement (50) ein erstes Element (52) und ein zweites Element (53) umfasst, dass das erste Element (52) mit dem zweiten Rad (R2) in Drehung um die zweite Radachse (AX4) fest verbunden ist, und dass das zweite Element (53) mit dem ersten Ritzel (P1) in Drehung um die erste Ritzelachse (AX2) fest verbunden ist.

**5.** Leistungsübertragungsmodul nach einem der Ansprüche 1 bis 3,
**dadurch gekennzeichnet, dass** das Leistungsübertragungsmodul (1) ein drittes Rad (R3), das mit dem zweiten Ritzel (P2) kämmt, und ein drittes Ritzel (P3), das mit dem ersten Rad (R1) kämmt, umfasst, wobei das dritte Rad (R3) um eine dritte Radachse (AX5) drehbar ist, wobei das dritte Ritzel (P3) um eine dritte Ritzelachse (AX6) drehbar ist, dass das Drehzahldifferenzelement (50) einen Führungsabschnitt (52) umfasst, der mit dem dritten Rad (R3) in Drehung um die dritte Radachse (AX5) fest verbunden ist, und dass das Drehzahldifferenzelement (50) einen geführten Abschnitt (53) umfasst, der mit dem dritten Ritzel (P3) in Drehung um die dritte Ritzelachse (AX6) fest verbunden ist.

**6.** Leistungsübertragungsmodul nach einem der Ansprüche 1 bis 5,
**dadurch gekennzeichnet, dass** der steuerbare Freilauf (40) einen Antriebsabschnitt (41) und einen antreibbaren Abschnitt (42) aufweist, das erste Rad (R1) mit dem Antriebsabschnitt (41) fest verbunden ist und das zweite Ritzel (P2) mit dem antreibbaren Abschnitt (42) fest verbunden ist.

**7.** Leistungsübertragungsmodul nach einem der Ansprüche 1 bis 6,
**dadurch gekennzeichnet, dass** der steuerbare Freilauf (40) einen Antriebsabschnitt (41) und einen angetriebenen Abschnitt (42) aufweist, dass die erste Welle (5) Längsnuten (7) in Eingriff mit Längsnuten (23) des Antriebsabschnitts (41) aufweist, und dass die zweite Welle Längsnuten (25) in Eingriff mit Längsnuten (24) des angetriebenen Abschnitts (42) aufweist.

**8.** Leistungsübertragungsmodul nach einem der Ansprüche 1 bis 7,
**dadurch gekennzeichnet, dass** die erste Radachse (AX1) und die zweite Ritzelachse (AX3) zusammenfallen, und dass die erste Ritzelachse (AX2) und die zweite Radachse (AX4) zusammenfallen.

**9.** Leistungsübertragungsmodul nach einem der Ansprüche 1 bis 8,
**dadurch gekennzeichnet, dass** die erste Radachse (AX1), die zweite Ritzelachse (AX3), die erste Ritzelachse (AX2) und die zweite Radachse (AX4) parallel zueinander sind.

**10.** Leistungsübertragungsmodul nach einem der Ansprüche 1 bis 9,
**dadurch gekennzeichnet, dass** ein Produkt aus dem ersten Geschwindigkeitsverhältnis (A) und dem zweiten Geschwindigkeitsverhältnis (B) kleiner als 1 ist.

**11.** Leistungsübertragungsmodul nach einem der Ansprüche 1 bis 10,
**dadurch gekennzeichnet, dass** das erste Drehzahlverhältnis (A) gleich dem Quotienten einer Anzahl von Zähnen (Z3) des ersten Ritzels (P1) geteilt durch eine Anzahl von Zähnen (Z1) des ersten Rades (R1) ist, und dass das zweite Drehzahlverhältnis (B) gleich dem Quotienten einer Anzahl von Zähnen (Z2) des zweiten Ritzels (P2) geteilt durch eine Anzahl von Zähnen (Z4) des zweiten Rades (R2) ist.

**12.** Leistungsübertragungsmodul nach einem der Ansprüche 1 bis 11,
**dadurch gekennzeichnet, dass** das Leistungsübertragungsmodul (1) eine Bremse (55) zum Bremsen der zweiten Welle (10) aufweist.

**13.** Luftfahrzeug (100) mit einem Drehflügel (85) und mindestens einem Propeller (87), wobei das Luftfahrzeug (100) mindestens einen Motor (90) aufweist, der ein Leistungsübertragungssystem (95) antreibt, wobei das Leistungsübertragungssystem (95) den Drehflügel (85) und mindestens einen Propeller (87) bewegt,
**dadurch gekennzeichnet, dass** das Flugzeug (100) ein Leistungsübertragungsmodul (1) nach einem der Ansprüche 1 bis 12 aufweist, wobei die erste Welle (5) kinematisch mit dem Leistungsübertragungssystem (95) verbunden ist und die zweite Welle (10) kinematisch mit dem Propeller (87) verbunden ist.

**14.** Luftfahrzeug nach Anspruch 13,
**dadurch gekennzeichnet, dass** ein nicht steuerbarer Freilauf (91) zwischen dem mindestens einen Motor (90) und dem Leistungsübertragungssystem (95) angeordnet ist.

**15.** Verfahren zum Übertragen von Leistung in einem Luftfahrzeug (100) zwischen einem Propeller (87) und einem Leistungsübertragungssystem (95) des Luftfahrzeugs (100), wobei das Luftfahrzeug (100) mindestens einen Motor (90) zum Antreiben des Leistungsübertragungssystems (95) aufweist,
**dadurch gekennzeichnet, dass** das Verfahren einen Schritt des Anbringens eines Leistungsübertragungsmoduls (1) gemäß einem der Ansprüche 1 bis 12 zwischen dem Leistungsübertragungssystem (95) und dem Propeller (87) umfasst.

**16.** Verfahren nach Anspruch 15,
**dadurch gekennzeichnet, dass** der steuerbare Freilauf (40) entweder in einem abgetrennten Modus, in dem ein Antriebsabschnitt (41) des steuerbaren Freilaufs (40) in keinem Fall einen antreibbaren Abschnitt (42) des steuerbaren Freilaufs (40) in Bewegung setzen kann, oder in einem verbundenen Modus arbeitet, in dem der Antriebsabschnitt (41) den antreibbaren Abschnitt (42) dreht, sobald eine Drehzahl des Antriebsabschnitts (41) höher als oder gleich einer Drehzahl des antreibbaren Abschnitts (42) ist, und die Kupplung (30) sich in einem eingekuppelten oder einem ausgekuppelten Modus befinden kann, wobei das Verfahren einen Flugbetriebsmodus umfasst, in dem die Kupplung (30) im ausgekuppelten Modus positioniert ist und in dem der steuerbare Freilauf (40) im verbundenen Modus positioniert ist, so dass während des Fluges die Kupplung (30) ausgekuppelt und der steuerbare Freilauf (40) im verbundenen Modus ist.

17. Verfahren nach Anspruch 16,
**dadurch gekennzeichnet, dass** das Verfahren zum Umschalten vom Flugbetriebsmodus auf einen Bodenbetriebsmodus, in dem der Propeller (87) still steht, die folgenden Schritte am Boden umfasst:

 - Positionieren der Kupplung (30) im eingekuppelten Modus,
 - Positionieren des steuerbaren Freilaufs (40) im abgetrennten Modus, wenn der Propeller (87) eine stabilisierte Drehzahl aufweist,
 - Positionieren der Kupplung (30) im ausgekuppelten Modus.

18. Verfahren nach einem der Ansprüche 15 bis 17,
**dadurch gekennzeichnet, dass** der steuerbare Freilauf (40) entweder in einem abgetrennten Modus, in dem ein Antriebsabschnitt (41) des steuerbaren Freilaufs (40) unter keinen Umständen einen antreibbaren Abschnitt (42) des steuerbaren Freilaufs (40) in Bewegung setzen kann, oder in einem verbundenen Modus arbeitet, in dem der antreibbare Abschnitt (41) den antreibbaren Abschnitt (42) dreht, sobald eine Drehzahl des Antriebsabschnitts (41) höher als oder gleich einer Drehzahl des antreibbaren Abschnitts (42) ist, wobei die Kupplung (30) sich in einem eingekuppelten oder ausgekuppelten Modus befinden kann, wenn nach einem Stopp des Propellers (87) der steuerbare Freilauf sich im abgetrennten Modus und die Kupplung im ausgekuppelten Modus befindet, wobei das Verfahren die folgenden Schritte am Boden zum Indrehungversetzen des Propellers (87) umfasst:

 - Positionieren der Kupplung (30) im eingekuppelten Modus,
 - Positionieren des steuerbaren Freilaufs (40) in dem verbundenen Modus, wenn der Propeller (87) eine stabilisierte Drehzahl aufweist,
 - Positionieren der Kupplung (30) im ausgekuppelten Modus.

**Claims**

1. Power transmission module (1) provided with a first shaft (5) and a second shaft (10), the first shaft (5) being capable of being connected to a power transmission system (95) which drives a rotary wing (85) and which is driven by at least one motor (90), the second shaft (10) being able to be mechanically connected to a propeller (7), the power transmission module (1) comprising a first gear stage (13) and a second gear stage (14) which have a first rotation speed ratio (A) and a second rotation speed ratio (B) which are different, respectively, the first gear stage (13) comprising a first wheel (R1) which can be moved in terms of rotation about a first wheel axis (AX1) and a first pinion (P1) which can be moved in terms of rotation about a first pinion axis (AX2), the second gear stage (14) comprising a second wheel (R2) which can be moved in terms of rotation about a second wheel axis (AX4) and a second pinion (P2) which can be moved in rotation about a second pinion axis (AX3), the second shaft (10) being fixedly joined in terms of rotation to the second pinion (P2) about the second pinion axis (AX3), a clutch (30) connecting the first pinion (P1) to the second wheel (R2), a controllable free wheel (40) connecting the first wheel (R1) to the second pinion (P2), **characterised in that**, the first shaft (5) being fixedly joined in terms of rotation to the first pinion (P1) about the first pinion axis (AX2) or being fixedly joined in terms of rotation to the first wheel (R1) about the first wheel axis (AX1), the power transmission module (1) comprises a speed differential member (50) which is arranged functionally between the first shaft (5) and the second shaft (10) so that the second shaft (10) brings about the rotation of the first shaft (5) when the second shaft (10) has a rotation speed greater than a rotation speed of the first wheel (R1) and when at the same time the clutch (30) is in a disengaged mode.

2. Power transmission module according to claim 1,
**characterised in that** the controllable free wheel (40) operates either in accordance with a disconnected mode during which a driving portion (41) of the controllable free wheel (40) cannot in any case move a drivable portion (42) of this controllable free wheel (40), or in accordance with a connected mode during which the driving portion (41) rotates the drivable portion (42) as soon as a rotation speed of the driving portion (41) becomes greater than or equal to a rotation speed of the drivable portion (42) whilst conversely the driving portion (41) is not capable of rotating the drivable portion (42) when the rotation speed of the driving portion (41) is less than the rotation speed of the drivable portion (42).

3. Power transmission module according to either claim 1 or 2,
**characterised in that** the speed differential member (50) includes an uncontrollable free wheel (51) which functions in accordance with a single mode during which a leading portion (52) of the uncontrollable free wheel (51) rotates a led portion (53) of the uncontrollable free wheel (51) when a rotation speed of the driving portion is greater than or equal to a rotation speed of the driven portion.

4. Power transmission module according to any one of claims 1 to 3,
**characterised in that** the speed differential member (50) is arranged in parallel with the clutch (30), the speed differential member (50) including a first member (52) and a second member (53), the first member (52) being fixedly joined in terms of rotation to the second wheel (R2) about the second wheel axis (AX4), the second member (53) being fixedly joined in terms of rotation to the first pinion (P1) about the first pinion axis (AX2).

5. Power transmission module according to any one of claims 1 to 3,
**characterised in that** the power transmission module (1) comprises a third wheel (R3) which is in engagement with the second pinion (P2) and a third pinion (P3) which is in engagement with the first wheel (R1), the third wheel (R3) being able to be moved in terms of rotation about a third wheel axis (AX5), the third pinion (P3) being able to be moved in terms of rotation about a third pinion axis (AX6), the speed differential member (50) comprising a leading portion (52) which is fixedly joined in terms of rotation to the third wheel (R3) about the third wheel axis (AX5), the speed differential member (50) comprising a led portion (53) which is fixedly joined in terms of rotation to the third pinion (P3) about the third pinion axis (AX6).

6. Power transmission module according to any one of claims 1 to 5,
**characterised in that**, the controllable free wheel (40) comprising a driving portion (41) and a drivable portion (42), the first wheel (R1) is fixedly joined to the driving portion (41) and the second pinion (P2) is fixedly joined to the drivable portion (42).

7. Power transmission module according to any one of claims 1 to 6,
**characterised in that**, the controllable free wheel (40) comprising a driving portion (41) and a drivable portion (42), the first shaft (5) comprises grooves (7) which are in engagement with grooves (23) of the driving portion (41), the second shaft comprising grooves (25) which are in engagement with grooves (24) of the drivable portion (42).

8. Power transmission module according to any one of claims 1 to 7,
**characterised in that** the first wheel axis (AX1) and the second pinion axis (AX3) are aligned, the first pinion axis (AX2) and the second wheel axis (AX4) being aligned.

9. Power transmission module according to any one of claims 1 to 8,
**characterised in that** the first wheel axis (AX1), the second pinion axis (AX3), the first pinion axis (AX2) and the second wheel axis (AX4) are mutually parallel.

10. Power transmission module according to any one of claims 1 to 9,
**characterised in that** a product of the first rotation speed ratio (A) and the second rotation speed ratio (B) is less than 1.

11. Power transmission module according to any one of claims 1 to 10,
**characterised in that** the first rotation speed ratio (A) is equal to the quotient of a number of teeth (Z3) of the first pinion (P1) divided by a number of teeth (Z1) of the first wheel (R1), the second rotation speed ratio (B) is equal to the quotient of a number of teeth (Z2) of the second pinion (P2) divided by a number of teeth (Z4) of the second wheel (R2) .

12. Power transmission module according to any one of claims 1 to 11,
**characterised in that** the power transmission module (1) comprises a brake (55) for braking the second shaft (10).

13. Aircraft (100) provided with a rotary wing (85) and at least one propeller (87), the aircraft (100) having at least one motor (90) which drives a power transmission system (95), the power transmission system (95) moving the rotary wing (85) and at least one propeller (87),
**characterised in that** the aircraft (100) comprises a power transmission module (1) according to any one of claims 1 to 12, the first shaft (5) being kinematically connected to the power transmission system (95), the second shaft (10) being kinematically connected to the propeller (87).

14. Aircraft according to claim 13,
**characterised in that** an uncontrollable free wheel (91) is arranged between the at least one motor (90) and the power transmission system (95).

15. Method for transmitting power in an aircraft (100) between a propeller (87) and a power transmission system (95) of the aircraft (100), the aircraft (100) having at least one motor (90) in order to move the power transmission system (95),
**characterised in that** the method comprises a step of arranging a power transmission module (1) according to any one of claims 1 to 12 between the power transmission system (95) and the propeller (87).

16. Method according to claim 15,
**characterised in that**, the controllable free wheel (40) functioning either in accordance with a disconnected mode during which a driving portion (41) of the controllable free wheel (40) cannot in any case move a drivable portion (42) of this controllable free wheel (40) or in accordance with a connected mode during which the driving portion (41) rotates the drivable portion (42) as soon as a rotation speed of the driving portion (41) is greater than or equal to a rotation speed of the drivable portion (42), the clutch (30) being able to be in an engaged mode or disengaged mode, the method comprises a flight operation mode during which the clutch (30) is positioned in the disengaged mode and during which the controllable free wheel (40) is positioned in the connected mode so that the clutch (30) is disengaged and the controllable free wheel (4) is in the flight connected mode.

17. Method according to claim 16,
**characterised in that**, in order to move from the flight operation mode to ground operation mode, during which the propeller (87) is stopped, the method comprises the following steps on the ground:

- positioning the clutch (30) in the engaged mode,
- positioning the controllable free wheel (40) in the disconnected mode when the propeller (87) has a stabilised rotation speed,
- positioning the clutch (30) in the disengaged mode.

18. Method according to any one of claims 15 to 17,
**characterised in that** the controllable free wheel (40) operating either in a disconnected mode during which a driving portion (41) of the controllable free wheel (40) cannot in any case move a drivable portion (42) of this controllable free wheel (40) or in a connected mode during which the driving portion (41) rotates the drivable portion (42) as soon as a rotation speed of the driving portion (41) is greater than or equal to a rotation speed of the drivable portion (42), the clutch (30) being able to be in an engaged mode or disengaged mode, following a stoppage of the propeller (87), when the controllable free wheel is in the disconnected mode and the clutch is in the disengaged mode, the method comprises the following steps on the ground in order to rotate the propeller (87);

- positioning the clutch (30) in the engaged mode,
- positioning the controllable free wheel (40) in the connected mode when the propeller (87) has a stabilised rotation speed,
- positioning the clutch (30) in the disengaged mode.

# Fig.1

# Fig.3

Fig.2

EP 3 409 977 B1

# Fig.4

# Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2670553
- FR 2964948
- WO 2007086906 A
- FR 3040977